# EUROPÄISCHE PATENTSCHRIFT

(11) **EP 4 029 661 B1**
(45) Veröffentlichungstag und Bekanntmachung des Hinweises auf die Patenterteilung: **30.10.2024**
(21) Anmeldenummer: 21214036.2
(22) Anmeldetag: 13.12.2021
(51) Int. Cl.: B25J 15/00, B25J 15/02

(54) **GREIFVORRICHTUNG FÜR EINEN ROBOTER, DIE EINE PROZESSVORRICHTUNG UMFASST**
GRIPPING DEVICE FOR A ROBOT COMPRISING A PROCESS DEVICE
DISPOSITIF DE PRÉHENSION POUR UN ROBOT COMPRENANT UN DISPOSITIF DE TRAITEMENT

(30) Priorität: 12.01.2021 DE 102021200202
(43) Veröffentlichungstag der Anmeldung: 20.07.2022
(73) Patentinhaber: Robert Bosch GmbH, 70442 Stuttgart (DE)
(72) Erfinder: Schlegel, Peter, 91619 Obernzenn (DE)

(56) Entgegenhaltungen:
- EP-A2- 2 886 264
- WO-A1-2013/005330
- DE-A1- 102011 009 259
- DE-A1- 102012 219 874
- DE-B4- 102016 208 456

## Beschreibung

Die Erfindung betrifft eine Greifvorrichtung gemäß dem Oberbegriff von Anspruch 1 und ein Verfahren zu deren Betrieb.

Von der Webseite, die am 02.11.2020 unter dem Internetlink https://schunk.com/shop/de/de/Greifsysteme/SCHUNK-Greifer/Parallelgreifer/PGN-plus-E/c/PGR_3359 abrufbar war, ist eine Greifvorrichtung bekannt, die zur Verwendung mit einem Roboter vorgesehen ist. Die Greifvorrichtung hat zwei bewegliche Greifbacken mit denen ein Werkstück gegriffen werden kann. Weitere Greifvorrichtungen sind in EP 2886264A2, DE102016208456B4, WO2013/005330A1, DE102011009259A1 und DE102012219874A1 offengelegt

Ein Vorteil der erfindungsgemäßen Greifvorrichtung besteht darin, dass die Zeit, in welcher das Werkstück mittels des Roboters und der Greifvorrichtung bewegt wird, für eine wertschöpfende Bearbeitung am Werkstück genutzt werden kann. Hierdurch kann die Durchlaufzeit des entsprechenden Herstellungsprozesses vermindert werden. Gemäß Anspruch 1 wird vorgeschlagen, dass die Greifvorrichtung eine Prozessvorrichtung umfasst, welche dazu eingerichtet ist, das gegriffene Werkstück zu bearbeiten, während die Greifvorrichtung mitsamt dem Werkstück durch den Roboter bewegt wird. Bei dem Roboter kann es sich beispielsweise um einen KnickarmRoboter, um einen kartesischen Roboter oder jede andere Art von Roboter handeln. Unter einer Bearbeitung des Werkstückstücks soll insbesondere jede Veränderung des Werkstücks an sich verstanden werden, die über eine reine Lageänderung des Werkstücks hinausgeht.

In den abhängigen Ansprüchen sind vorteilhafte Weiterbildungen und Verbesserungen der Erfindung angegeben.

Gemäss der Erfindung ist die Prozessvorrichtung beweglich relativ zum Grundkörper.

Hierdurch kann die Prozessvorrichtung in unterschiedliche Stellungen bewegt werden, wobei eine Stellung für das Greifen und das Ablegen des Werkstücks optimal ist, wobei eine andere Stellung für die Bearbeitung des Werkstücks optimal ist. Die Prozessvorrichtung ist vorzugsweise als Ganzes relativ zum Grundkörper beweglich. Es bewegen sich also nicht nur Einzelteile der Prozessvorrichtung, sondern vorzugsweise mehr als 60% der Masse der Prozessvorrichtung.

Gemäss der Erfindung ist die Prozessvorrichtung zwischen einer ersten und einer zweiten Endstellung linearbeweglich relativ zum Grundkörper, wobei sie in der ersten Endstellung das gegriffene Werkstück zumindest teilweise umgibt, wobei die Prozessvorrichtung in der zweiten Endstellung derart abseits des gegriffenen Werkstücks angeordnet ist, dass das Werkstück von einer Unterlage gegriffen werden kann oder auf der Unterlage abgelegt werden kann. Die Beweglichkeit der Prozessvorrichtung wird hierdurch auf besonders einfache und gleichzeitig Platz sparende Weise erreicht. Die Prozessvorrichtung ist vorzugsweise mittels wenigstens einer Linearführung zumindest mittelbar am Grundkörper geführt. Die Prozessvorrichtung wird vorzugsweise mittels eines Elektromotors zwischen der ersten und der zweiten Endstellung hin- und her bewegt, wobei auch ein pneumatischer Antrieb denkbar ist. Die Linearführung ist vorzugsweise als Linearwälzlager ausgeführt. Sie kann endlos umlaufende Wälzkörper oder in einem Käfig gehaltene Wälzkörper aufweisen. Die Linearführung kann als Teleskopführung ausgeführt sein, so dass sie das Werkstück in der zweiten Endstellung im Wesentlichen nicht überdeckt.

Es kann vorgesehen sein, dass die Prozessvorrichtung dazu eingerichtet ist, das Werkstück zu entmagnetisieren. Die Prozessvorrichtung kann hierfür eine elektrische Spule umfassen. Die Spule wird vorzugsweise mit einem elektrischen Strom beaufschlagt, der eine sich umkehrende Fließrichtung aufweist.

Es kann vorgesehen sein, dass die Prozessvorrichtung dazu eingerichtet ist, das Werkstück mit einer Beschriftung zu versehen. Die Prozessvorrichtung kann hierfür eine Laserstrahl-Erzeugungsvorrichtung umfassen, wobei der entsprechende Lasterstrahl mittels eines beweglichen Spiegels derart auf unterschiedliche Stellen des Werkstücks lenkbar ist, dass es dort zu Verfärbungen, Materialabtragungen und/oder Umstrukturierungen am Werkstück kommt. Der Lasterstrahl wirkt dabei vorzugsweise gepulst auf das Werkstück ein.

Es kann vorgesehen sein, dass die Prozessvorrichtung dazu eingerichtet ist, das Werkstück auf eine vorgegebene Temperatur zu erwärmen oder abzukühlen. Eine derartige Bearbeitung wird auch als Temperierung bezeichnet. Auch hierfür kann die bereits angesprochene elektrische Spule nutzbringen angewendet werden, beispielsweise, um Wirbelströme in das Werkstück zu induzieren, die wiederum eine Erwärmung des Werkstücks zur Folge haben.

Es kann vorgesehen sein, dass die Prozessvorrichtung das Werkstück in der ersten Endstellung ringartig umgibt. Die Prozessvorrichtung kann eine elektrische Spule umfassen, welche das Werkstück in der ersten Endstellung ringartig umgibt. Eine Erwärmung des Werkstücks erfolgt dann vorzugsweise induktiv, wobei die genannte Spule mit Wechselstrom beaufschlagt wird. Die Spule kann ebenfalls dazu genutzt werden, das Werkstück zu entmagnetisieren. Hierfür wird die Spule ebenfalls mit wechselnden Stromrichtungen beaufschlagt.

Es kann vorgesehen sein, dass die Prozessvorrichtung dazu eingerichtet ist, das Werkstück so zu bearbeiten, dass eine vorgegebene Abmessung des Werkstücks genau eingehalten ist. Eine derartige Bearbeitung wird auch als Kalibrieren bezeichnet. Vorzugsweise wird das Werkstück dabei spanlos, insbesondere durch Umformen, bearbeitet. Unmittelbar im Anschluss an diese Bearbeitung kann das Werkstück durch den Roboter in eine andere Baugruppe eingebaut werden, wobei die genannte Abmessung vorzugsweise Einfluss auf die Passgenauigkeit zwischen dem Werkstück und der genannten anderen Baugruppe hat.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine grobschematische Seitenansicht eines Roboters mit einer erfindungsgemäßen Greifvorrichtung;
- Fig. 2: eine grobschematische Seitenansicht einer erfindungsgemäßen Greifvorrichtung ohne die Prozessvorrichtung;
- Fig. 3: einen grobschematischen Querschnitt der in Fig. 2 fehlenden Prozessvorrichtung;
- Fig. 4: eine grobschematische Seitenansicht der Greifvorrichtung nach Fig. 2, wobei sich die Prozessvorrichtung nach Fig. 3 in der zweiten Endstellung befindet; und
- Fig. 5: eine grobschematische Seitenansicht der Greifvorrichtung nach Fig. 2, wobei sich die Prozessvorrichtung nach Fig. 3 in der ersten Endstellung befindet.

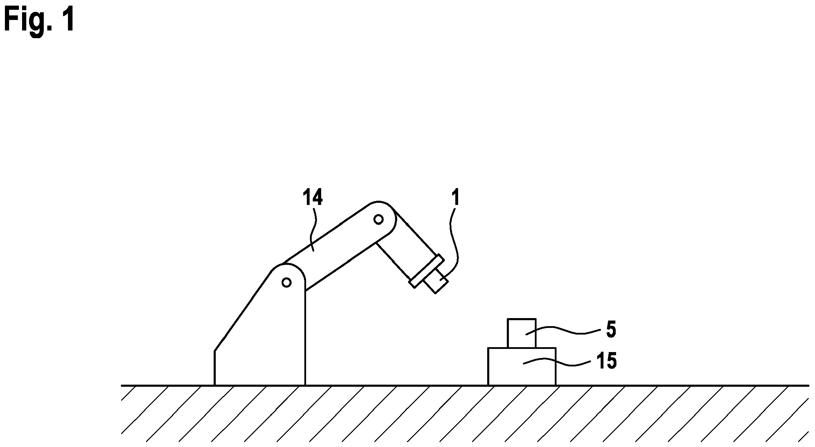

Fig. 1 zeigt eine grobschematische Seitenansicht eines Roboters 14 mit einer erfindungsgemäßen Greifvorrichtung 1. Der Roboter 14 ist vorliegend als Knickarmroboter ausgeführt, wobei er auch als kartesischer Roboter oder in jeder beliebigen anderen Bauart ausgeführt sein kann. Die Greifvorrichtung 1 ist am äußersten Arm des Roboters 14 befestigt, so dass sie entlang einer nahezu beliebigen Bahn durch den Raum bewegt werden kann. Mit der Greifvorrichtung 1 kann das Werkstück 5 von einer Unterlage bzw. einer Baugruppe 15 gegriffen und aufgenommen oder dort abgelegt werden. Während das Werkstück 5 durch den Raum bewegt wird, findet erfindungsgemäß eine Bearbeitung an dem Werkstück 5 statt.

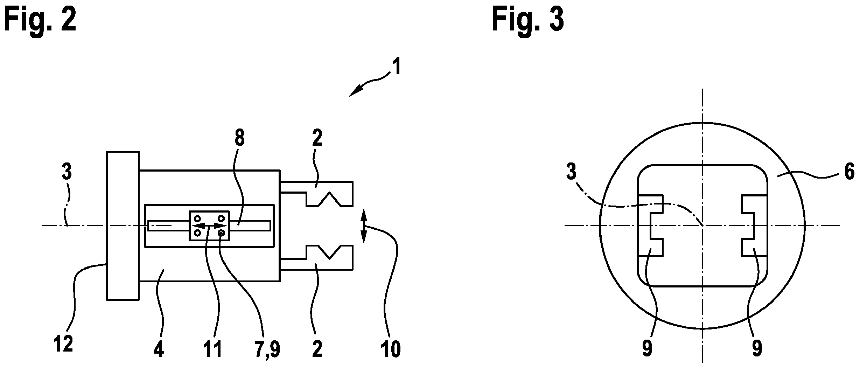

Fig. 2 zeigt eine grobschematische Seitenansicht einer erfindungsgemäßen Greifvorrichtung 1 ohne die Prozessvorrichtung (Nr. 6 in Fig. 3). Die Greifvorrichtung hat einen Grundkörper 4, der eine Mittelachse 3 aufweist. An einem in Richtung der Mittelachse 3 weisenden Ende des Grundkörpers 4 ist eine mechanische Schnittstelle 12 vorgesehen, über welche die Greifvorrichtung 1 an dem Roboter befestig werden kann. Diese Schnittstelle 12 wird typischerweise durch den Hersteller des Roboters definiert. Sie ist typischerweise so gestaltet, dass die Greifvorrichtung 1 fest mit dem Roboter verbunden ist, wobei gleichzeitig eine genaue Ausrichtung zwischen Greifvorrichtung 1 und Roboter gegeben ist. Vorliegend umfasst die Schnittstelle 12 eine ebene Fläche, die senkrecht zur Mittelachse 3 ausgerichtet ist. Die

Greifvorrichtung 1 kann mittels (nicht dargestellter) Schraubbolzen am Roboter befestigt sein, welche die genannte ebene Fläche durchsetzen.

An dem Grundkörper 4 sind zwei Greifbacken 2 beweglich aufgenommen. Vorliegend sind beide Greifbacken 2 entlang einer Greifrichtung 10, die quer zur Mittelachse 3 ausgerichtet ist, linearbeweglich, wobei sie beispielsweise von einem Elektromotor oder pneumatisch angetrieben werden. Es können auch schwenkbewegliche Greifbaken 2 zum Einsatz kommen. Es können auch drei oder mehr Greifbacken 2 vorgesehen sein. Ein Greifbacken 2 kann fest mit dem Grundkörper 4 verbunden sein.

Die Außenumfangsfläche des Grundkörpers 4 ist vorliegend im Wesentlichen rotationssymmetrisch bezüglich der Mittelachse 3 ausgeführt. Dort sind zwei Linearführungen 7 befestigt, die jeweils parallel zur Mittelachse 3 angeordnet sind, wobei sie diametral gegenüberliegend bezüglich der Mittelachse 3 angeordnet sind. Die Linearführungen 7 umfassen jeweils eine Führungsschiene 8, die sich mit einer im Wesentlichen konstanten Querschnittsform entlang der Mittelachse 3 erstreckt, wobei sie am Grundkörper 4 befestigt ist. An der Führungsschiene 8 ist ein Führungswagen 9 entlang einer Bewegungsrichtung 11 linearbeweglich gelagert, vorzugsweise über Wälzkörper, die höchst vorzugsweise endlos umlaufen.

Fig. 3 zeigt einen grobschematischen Querschnitt der in Fig. 2 fehlenden Prozessvorrichtung 6. Die Schnittebene ist dabei senkrecht zur Mittelachse 3 ausgerichtet. Die Prozessvorrichtung 6 umgibt die den Grundkörper ring- bzw. hülsenartig. Ihre Außenumfangsfläche ist vorliegenden kreiszylindrisch bezüglich der Mittelachse 3 ausgeführt. Ihre Innenumfangsform ist vorliegenden quadratisch mit verrundeten Ecken ausgeführt. Innerhalb der so definierten Querschnittsform kann beispielsweise eine elektrische Spule aufgenommen sein, welche das Werkstück ringartig umgibt, wenn sich die Prozessvorrichtung in der ersten Endstellung befindet.

An zwei gegenüberliegenden Quadratseiten der Innenquerschnittsform ist jeweils ein Führungswagen 9 der Linearführung befestigt. Der Führungswagen ist beispielsweise U-förmig mit einer Basis und zwei U-Schenkeln ausgeführt, wobei die Basis an der genannten Quadratseite befestigt ist. Die Führungsschiene der Linearführung ist zwischen den U-Schenkeln angeordnet.

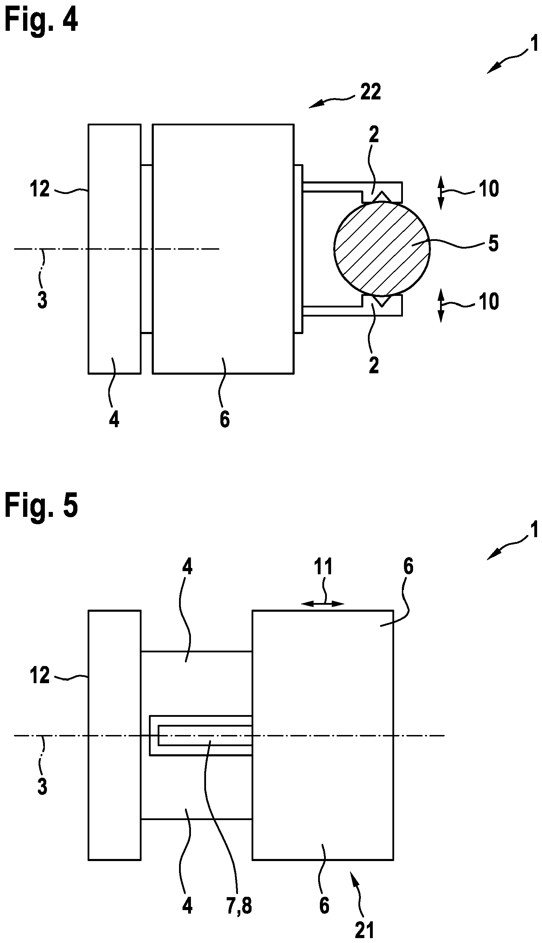

Fig. 4 zeigt eine grobschematische Seitenansicht der Greifvorrichtung 1 nach Fig. 2, wobei sich die Prozessvorrichtung 6 nach Fig. 3 in der zweiten Endstellung 22 befindet. In der zweiten Endstellung 22 befindet sich die Prozessvorrichtung 6 im Wesentlich ausschließlich über dem Grundkörper 4, wobei sie die Greifbacken 2 und das Werkstück 5 nicht überdeckt. Das Greifen und das Ablegen des Werkstücks 5 wird also durch die Prozessvorrichtung 6 im Wesentlichen nicht behindert.

Weiter ist in Fig. 4 zu erkennen, wie die beiden Greifbacken 2 durch Bewegung entlang der Greifrichtung 10 das Werkstück 5 greifen.

Fig. 5 zeigt eine grobschematische Seitenansicht der Greifvorrichtung 1 nach Fig. 2, wobei sich die Prozessvorrichtung 6 nach Fig. 3 in der ersten Endstellung 21 befindet. Die Prozessvorrichtung 6 umgibt das Werkstück jetzt vollständig. Eine in der Prozessvorrichtung 6 aufgenommene elektrisch Spule hat in der ersten Endstellung 21 eine maximal effektive Wirkung auf das Werkstück.

### Bezugszeichen

- 1: Greifvorrichtung
- 2: Greifbacken
- 3: Mittelachse
- 4: Grundkörper
- 5: Werkstück
- 6: Prozessvorrichtung
- 7: Linearführung
- 8: Führungsschiene
- 9: Führungswagen

- 10: Greifrichtung
- 11: Bewegungsrichtung
- 12: Schnittstelle zum Anbau an den Roboter
- 14: Roboter
- 15: Baugruppe, Unterlage

- 21: erste Endstellung
- 22: zweite Endstellung

## Patentansprüche

1. Greifvorrichtung (1) zur Verwendung mit einem Roboter (14), wobei die Greifvorrichtung (1) einen Grundkörper (4) umfasst, welcher an dem Roboter (14) befestigbar ist, wobei wenigsten zwei Greifbacken (2) vorgesehen sein, wobei zumindest ein Greifbacken (2) beweglich relativ zum Grundkörper (4) ist, so dass mit den wenigstens zwei Greifbacken (2) ein Werkstück (5) greifbar ist,
wobei die Greifvorrichtung (1) eine Prozessvorrichtung (6) umfasst,
wobei die Prozessvorrichtung (6) zwischen einer ersten und einer zweiten Endstellung (21; 22) linearbeweglich relativ zum Grundkörper (4) ist,
**dadurch gekennzeichnet, dass** die Prozessvorrichtung (6) in der ersten Endstellung (21) das gegriffene Werkstück (5) zumindest teilweise umgibt, wobei die Prozessvorrichtung (6) in der zweiten Endstellung (22) derart abseits des gegriffenen Werkstücks (5) angeordnet ist, dass das Werkstück (5) von einer Unterlage (15) gegriffen werden kann oder auf der Unterlage (15) abgelegt werden kann, wobei die Prozessvorrichtung (6) dazu eingerichtet ist, das gegriffene Werkstück (5) zu bearbeiten, während die Greifvorrichtung (1) mitsamt dem Werkstück (5) durch den Roboter (14) bewegt wird.

2. Greifvorrichtung (1) nach Anspruch 1,
wobei die Prozessvorrichtung (6) dazu eingerichtet ist, das Werkstück (5) zu entmagnetisieren.

3. Greifvorrichtung nach einem der vorstehenden Ansprüche,
wobei die Prozessvorrichtung (6) eine elektrische Spule umfasst.

4. Greifvorrichtung nach einem der vorstehenden Ansprüche,
wobei die Prozessvorrichtung (6) dazu eingerichtet ist, das Werkstück (5) mit einer Beschriftung zu versehen.

5. Greifvorrichtung (1) nach einem der vorstehenden Ansprüche,
wobei die Prozessvorrichtung (6) dazu eingerichtet ist, das Werkstück (5) auf eine vorgegebene Temperatur zu erwärmen oder abzukühlen.

6. Greifvorrichtung (1) nach Anspruch 2 oder 5,
wobei die Prozessvorrichtung (6) das Werkstück (5) in der ersten Endstellung (21) ringartig umgibt.

7. Greifvorrichtung (1) nach einem der vorstehenden Ansprüche,
wobei die Prozessvorrichtung (6) dazu eingerichtet ist, das Werkstück (5) so zu bearbeiten, dass eine vorgegebene Abmessung des Werkstücks (5) genau eingehalten ist.

## Claims

1. Gripping device (1) for use with a robot (14), wherein the gripping device (1) comprises a basic body (4) which is fastenable to the robot (14), wherein at least two gripping jaws (2) are provided, wherein at least one gripping jaw (2) is movable relative to the basic body (4) such that a workpiece (5) can be gripped with the at least two gripping jaws (2),
wherein the gripping device (1) comprises a process device (6),
wherein the process device (6) is linearly movable relative to the basic body (4) between a first and a second end position (21; 22),
**characterized in that**, in the first end position (21), the process device (6) at least partially surrounds the gripped workpiece (5), wherein, in the second end position (22), the process device (6) is arranged away from the gripped workpiece (5) in such a manner that the workpiece (5) can be gripped by a substrate (15) or can be deposited on the substrate (15), wherein the process device (6) is designed to process the gripped workpiece (5) while the gripping device (1) is moved together with the workpiece (5) by the robot (14).

2. Gripping device (1) according to Claim 1,
wherein the process device (6) is designed to demagnetize the workpiece (5).

3. Gripping device according to either of the preceding claims,
wherein the process device (6) comprises an electric coil.

4. Gripping device according to one of the preceding claims,
wherein the process device (6) is designed to provide the workpiece (5) with a label.

5. Gripping device (1) according to one of the preceding claims,
wherein the process device (6) is designed to heat or to cool the workpiece (5) to a predefined temperature.

6. Gripping device (1) according to Claim 2 or 5,
wherein the process device (6) surrounds the workpiece (5) in the manner of a ring in the first end position (21).

7. Gripping device (1) according to one of the preceding claims,
wherein the process device (6) is designed to process the workpiece (5) in such a manner that a predefined dimension of the workpiece (5) is precisely maintained.

## Revendications

1. Dispositif de préhension (1) destiné à être utilisé avec un robot (14), le dispositif de préhension (1) comprenant un corps de base (4) qui est apte à être fixé au robot (14), au moins deux mâchoires de préhension (2) étant prévues, au moins une mâchoire de préhension (2) étant mobile par rapport au corps de base (4), de sorte qu'une pièce à traiter (5) soit apte à être saisie avec les au moins deux mâchoires de préhension (2),
le dispositif de préhension (1) comprenant un dispositif de traitement (6),
le dispositif de traitement (6) étant mobile linéairement par rapport au corps de base (4) entre une première et une deuxième position finale (21 ; 22),
**caractérisé en ce que** le dispositif de traitement (6), dans la première position d'extrémité (21), entoure au moins partiellement la pièce à traiter (5) saisie, le dispositif de traitement (6), dans la deuxième position d'extrémité (22), étant disposé à l'écart de la pièce à traiter (5) saisie, **en ce que** la pièce (5) est apte à être saisie par un support (15) ou déposée sur le support (15), le dispositif de traitement (6) étant conçu pour traiter la pièce saisie (5) pendant que le dispositif de préhension (1) est déplacé avec la pièce (5) par le robot (14).

2. Dispositif de préhension (1) selon la revendication 1,
dans lequel le dispositif de traitement (6) est conçu pour démagnétiser la pièce à traiter (5).

3. Dispositif de préhension selon l'une des revendications précédentes,
dans lequel le dispositif de traitement (6) comprend une bobine électrique.

4. Dispositif de préhension selon l'une des revendications précédentes,
dans lequel le dispositif de traitement (6) est conçu pour munir la pièce à traiter (5) d'une inscription.

5. Dispositif de préhension (1) selon l'une des revendications précédentes,
dans lequel le dispositif de traitement (6) est conçu pour chauffer ou refroidir la pièce (5) à une température prédéfinie.

6. Dispositif de préhension (1) selon la revendication 2 ou la revendication 5, dans lequel le dispositif de traitement (6) entoure la pièce (5) à la manière d'un anneau dans la première position finale (21).

7. Dispositif de préhension (1) selon l'une des revendications précédentes,
dans lequel le dispositif de traitement (6) est agencé pour traiter la pièce (5) de manière qu'une dimension prédéterminée de la pièce (5) soit exactement respectée.
